# EUROPEAN PATENT APPLICATION

(11) **EP 1 313 075 A2**
(43) Date of publication of application: **21.05.2003**
(21) Application number: 02251152.1
(22) Date of filing: 20.02.2002
(51) Int. Cl.: G07F 19/00

(54) **Electronic money processing method and program**

(30) Priority: 19.11.2001 JP 2001352947
(71) Applicant: FUJITSU LIMITED, Kawasaki-shi, Kanagawa 211-8588 (JP)
(72) Inventor: Okamura, Michio, c/o Fujitsu Limited, Kawasaki-shi, Kanagawa 211-8588 (JP)
(74) Representative: Stebbing, Timothy Charles

(57) **Abstract**

An electronic money system is constructed by: a terminal apparatus (12) of the user; an electronic money card (14) having an interface which can be connected to the terminal apparatus and a mobile phone function; and a bank server (10) which is connected to the terminal apparatus via the Internet (16) and connected to the electronic money card (14) via a mobile telephone network. A payment request in which a payment money amount and a payment date/time have been designated is notified to the bank server (10) by the terminal apparatus (12). When the payment date/time arrives, a telephone call is made from the bank server to the electronic money card, establishment of a connection is confirmed, and payment of electronic money to the card is executed. By setting a payment date/time in the future, payment to a lost or stolen card can be prevented.

## Description

The invention relates to an electronic money processing method for performing a card withdrawal of electronic money by an electronic money card, a terminal apparatus of the user, a bank server, a program for realizing such a method (which may be stored on a recording medium), and an electronic money system.

Hitherto, an electronic money card represented by a smart card has been used as a medium for performing shopping or the like by using electronic money in place of bills (banknotes) or coins.

In such an electronic money card, an IC chip built into the card has an MPU and a memory. By installing electronic money software in the memory, payment of electronic money can be made from a bank account into the card by using an ATM or the like of a bank, and payment for shopping or services can be made by debiting a balance of electronic money stored in the card.

However, in an electronic money system using such an electronic money card, to transfer funds from the bank account to the electronic money card, the electronic money card has to be set into the ATM or the like of the bank and operated in a manner similar to conventional cash withdrawal. Inconvenience still remains as compared with convenience of online banking using the Internet which can be used around the clock. To solve such a drawback, there has been considered an electronic money system incorporating a wireless communication function. For example, by building a PHS (Personal Handyphone System) function into the electronic money card, payment of electronic money from the bank account and payment to an electronic register or a vending machine can be made in an online manner by using a PHS telephone network. PHS is a cellular telephone system in use in Japan.

However, an electronic money card having a wireless communication function has a large problem in terms of security against illegal use due to theft or loss of the card, similar to that with an ordinary cellular phone. There is a great risk that electronic money is withdrawn from the bank account and used before the user becomes aware of the theft or loss of his card and takes a necessary procedure such as informing the bank which issued the card. Although the electronic money card can be provided with security functions such as a user-performed authenticating function, encrypting/decrypting function, mutual authenticating function, digital signature function, or an access control function on the assumption that the card is illegally used, the security is not always perfect against illegal use by a criminal act. Therefore there is still cause for concern in terms of the security.

According to the invention, an electronic money processing method is provided which assures high security against payment from a bank account in an online manner, by a relatively simple mechanism using an electronic money card having a wireless communication (e.g., mobile phone) function. A program for realizing such a method and a recording medium storing the program are also provided.

According to the invention, there is provided an electronic money processing method for a bank server which is connected to a terminal apparatus of the user via a communication network (which may be a fixed network such as the Internet), and connected via a wireless communication network to an electronic money card having an interface that can be connected to the terminal apparatus and a wireless communication function. The method comprises:
a payment accepting step wherein a payment application (payment request) in which a payment money amount and a payment date/time which has been set by changing a time lag from a payment application date/time in accordance with the payment money amount have been designated, is received from the terminal apparatus; and
a payment executing step wherein when the payment date/time is reached, a wireless communication is made from the bank server to the electronic money card, establishment of a connection is confirmed, and payment of the electronic money (i.e. transfer to the card) is executed.

According to another aspect of the invention, there is provided an electronic money processing method for a bank server, comprising:
a payment accepting step wherein a payment application in which a payment money amount has been designated, is received from the terminal apparatus; and
a payment executing step wherein a payment date/time is set by changing a time lag from a payment application date/time at which the payment application has been received in accordance with the accepted payment money amount, when the payment date/time arrives, a wireless communication is made to the electronic money card, establishment of a connection is confirmed, and payment of the electronic money is executed. In this case, the above processing method may further comprise the step of notifying the terminal apparatus of the set payment date/time.

As mentioned above, according to the invention, by providing the time lag between the payment application and the payment execution, even if loss or theft of the electronic money card occurs, by requesting the bank to stop the payment execution or requesting a network to prevent establishment of the wireless communication (i.e. stop the connection) prior to the set payment date/time, the execution of illegal withdrawal can be prevented. For example, the larger the payment money amount is, the larger the time lag between the payment application date/time and the payment date/time is. Therefore, the larger the sum being transferred, the longer a time margin until any illegal withdrawal can be performed. During such an interval, a countermeasure for stopping execution of the payment can be certainly taken. Although a possibility exists that the security is broken and the payment application is made illegally since the payment application is made via the Internet, with respect to the actual execution of the payment, the network can be irrevocably requested to prevent the connection. Then, it is impossible to cancel such a request over the Internet or in any other way, so that high security is assured also with respect to this point.

In the payment applying step, real-time payment and a designation payment date/time may be prepared as a payment date/time and the user can be allowed to select either of them. In the payment applying step, the payment date/time in which the time lag between the payment application date/time and the payment execution date/time has been changed in accordance with the payment money amount inputted by the user can be also automatically set. In the payment applying step, prior to notifying the payment application, predetermined user authentication information including an account number and a telephone number (or network device identifier) obtained from the electronic money card may be transmitted from the terminal apparatus to the bank server, thereby obtaining authentication. Therefore, the user can easily access the bank server for the purpose of applying for the payment without needing to input the account number and the telephone number. The user authentication information includes a name, an address, and a personal identification number which were inputted by the user in addition to the account number and the telephone number obtained from the electronic money card. In the payment executing step, it may be determined that a phone number of an originator obtained by the communication from the bank server lies within a predetermined range (selection) of bank telephone numbers which have previously been stored, and an automatic response is made, thereby establishing a connection (telephone talk connection). In the payment executing step, if the connection is not established when the wireless communication is made from the bank server to the electronic money card, the execution of the payment is stopped and the payment application is cancelled. Such a situation corresponds to a case where a request to stop the connection has been made to the wireless network following loss or theft of the card. In addition, in the payment executing step, a payment stop can be inputted to the bank server prior to a payment term, thereby stopping the execution of the payment and cancelling the payment application. Such a situation corresponds to a case where the bank is requested to stop the payment following loss or theft of the card.

The invention provides a program which is executed by the bank server. The program allows a computer forming a bank server, which is connected to a terminal apparatus of the user via a communication network such as the Internet and connected via a wireless communication network to an electronic money card having an interface that can be connected to the terminal apparatus and a wireless communication function, to execute:
a payment accepting step wherein a payment application (transfer request), in which a payment money amount and a payment date/time which has been set by changing a time lag from a payment application date/time in accordance with the payment money amount have been designated, is received from the terminal apparatus; and
a payment executing step wherein when the payment date/time is reached, a wireless communication is made from the bank server to the electronic money card, establishment of a connection is confirmed, and payment of the electronic money is executed. Thus, the card is replenished.

According to another aspect of the invention there is provided a program which is executed by a bank server, the program allowing a computer forming the bank server to execute:
a payment accepting step wherein a payment application in which a payment money amount has been designated is received from the terminal apparatus; and
a payment executing step wherein a payment date/time is set by changing a time lag from a payment application date/time at which the payment application has been received in accordance with the accepted payment money amount, when the payment date/time arrives, communication is made to the electronic money card, establishment of a connection is confirmed, and payment of the electronic money to the card is executed.

The invention also provides a computer-readable recording medium in which a program which is executed by a bank server has been stored. The recording medium stores the program for allowing a computer forming a bank server which is connected to a terminal apparatus of the user via a communication network such as the Internet and connected via a wireless communication network to an electronic money card having an interface that can be connected to the terminal apparatus and a wireless communication function, to execute:
a payment accepting step wherein a payment application, in which a payment money amount and a payment date/time which has been set by changing a time lag from a payment application date/time in accordance with the payment money amount have been designated, is received from the terminal apparatus; and
a payment executing step wherein when the payment date/time comes, communication is made from the bank server to the electronic money card, establishment of a connection is confirmed, and payment of the electronic money is executed.

According to another aspect of the invention, there is provided a recording medium in which a program which is executed by a bank server has been stored, the program allowing a computer forming the bank server to execute:
a payment accepting step wherein a payment application, in which a payment money amount has been designated, is received from the terminal apparatus; and
a payment executing step wherein a time lag from a payment application date/time at which the payment application has been received is changed in accordance with the accepted payment money amount, a payment date/time is set, when the payment date/time comes, communication is made to the electronic money card, establishment of a connection is confirmed, and payment of the electronic money is executed.

The invention provides an electronic money processing method for a terminal apparatus in which an electronic money card having an interface and a wireless communication function is connected to a card interface (e.g. a physical slot) and which is connected, e.g. via the Internet, to a bank server that is connected to the electronic money card via a communication network. The electronic money processing method for the terminal apparatus comprises:
an authentication obtaining step wherein predetermined user authentication information including an account number and a telephone number (device identifier) obtained from the electronic money card is transmitted from the terminal apparatus to the bank server and authentication is obtained; and
a payment applying step wherein the bank server is notified of a payment application in which a payment money amount and a payment date/time which has been set by changing a time lag from a payment application date/time in accordance with the payment money amount have been designated,
wherein at the payment date/time, communication is made from the bank server to the electronic money card, establishment of a connection is confirmed, and payment of the electronic money is executed.

According to another aspect of the invention, there is provided an electronic money processing method for a terminal apparatus, comprising:
an authentication obtaining step wherein predetermined user authentication information including an account number and a telephone number obtained from the electronic money card is transmitted from the terminal apparatus to the bank server and authentication is obtained; and
a payment applying step wherein the bank server is notified of a payment application in which a payment money amount has been designated,
wherein at a payment date/time which has been set by changing a time lag from a payment application date/time at which the payment application is received in accordance with the payment money amount accepted by the bank server, a communication channel is opened to the electronic money card, establishment of a connection is confirmed, and payment of the electronic money is executed. Details in this case are fundamentally the same as those in case of the processing method of an electronic money system.

The invention provides a program for a terminal apparatus. The program allows a computer, forming a terminal apparatus in which an electronic money card having an interface and a communication function is connected to a card interface and which is connected e.g. via the Internet to a bank server that is connected to the electronic money card via a communication network, to execute:
an authentication obtaining step wherein predetermined user authentication information including an account number and a telephone number obtained from the electronic money card is transmitted from the terminal apparatus to the bank server and authentication is obtained; and
a payment applying step wherein the bank server is notified of a payment application in which a payment money amount and a payment date/time which has been set by changing a time lag from a payment application date/time in accordance with the payment money amount have been designated,
wherein when the payment date/time is reached, a communication is made from the bank server to the electronic money card, establishment of a connection is confirmed, and the payment applied for is made to the card.

According to another aspect of the invention of a program for a terminal apparatus, the program allows a computer forming the terminal apparatus to execute:
an authentication obtaining step wherein predetermined user authentication information including an account number and a telephone number obtained from an electronic money card is transmitted from the terminal apparatus to a bank server and authentication is obtained; and
a payment applying step wherein the bank server is notified of a payment application in which a payment money amount has been designated,
wherein at a payment date/time which has been set by changing a time lag from a payment application date/time at which the payment application is received in accordance with the payment money amount accepted by the bank server, communication is made to the electronic money card, establishment of a connection is confirmed, and payment of the electronic money is executed. Details in this case are fundamentally the same as those in case of the processing method of an electronic money system.

The invention further provides a computer-readable recording medium in which a program for a terminal apparatus has been stored. The recording medium stores the program for allowing a computer forming the terminal apparatus in a system in which an electronic money card having an interface and a communication function is connected to a card interface and which is connected to a bank server that is connected to the electronic money card via a communication network, to execute:
an authentication obtaining step wherein predetermined user authentication information including an account number and a telephone number obtained from the electronic money card is transmitted from the terminal apparatus to the bank server and authentication is obtained; and
a payment applying step wherein the bank server is notified of a payment application in which a payment money amount and a payment date/time which has been set by changing a time lag from a payment application date/time in accordance with the payment money amount have been designated,
wherein when the payment date/time arrives, communication is made from the bank server to the electronic money card, establishment of a connection is confirmed, and payment of the electronic money is executed.

According to another aspect of the invention there is provided a recording medium in which a program for a terminal apparatus has been stored, the program allowing a computer forming the terminal apparatus to execute:
an authentication obtaining step wherein predetermined user authentication information including an account number and a telephone number obtained from an electronic money card is transmitted from the terminal apparatus to a bank server and authentication is obtained; and
a payment applying step wherein the bank server is notified of a payment application in which a payment money amount has been designated,
wherein at a payment date/time which has been set by changing a time lag from a payment application date/time at which the payment application is received in accordance with the payment money amount accepted by the bank server, communication is made to the electronic money card, establishment of a connection is confirmed, and payment of the electronic money is executed. Details in this case are fundamentally the same as those in case of the processing method of an electronic money system.

The invention provides a processing method for an electronic money card which is coupled to a terminal apparatus of the user e.g. by insertion into a slot, and connected to a bank server via a wireless communication network. The processing method for the electronic money card comprises:
a payment supporting step wherein when a payment application in which at least a payment money amount has been designated is notified to the bank server by the terminal apparatus, the user's own telephone number (or card network address) and account number which have previously been stored are provided; and
a payment receiving step wherein at a payment date/time which has been set by changing a time lag from a payment application date/time in accordance with the payment money amount, if a communication is received from the bank server, establishment of a connection is confirmed, and payment of the electronic money is received by the card.

The invention provides a program for an electronic money card. The program allows a computer built in the electronic money card which is connected to a terminal apparatus of the user and connected to a bank server via a wireless communication network to execute:
a payment supporting step wherein when a payment application in which at least a payment money amount has been designated is notified to the bank server by the terminal apparatus, the user's own telephone number and account number which have previously been stored are provided; and
a payment receiving step wherein at a payment date/time which has been set by changing a time lag from a payment application date/time in accordance with the payment money amount, if a communication is received from the bank server, establishment of a connection is confirmed, and payment of the electronic money is received.

The invention also embraces a computer-readable recording medium in which a program for an electronic money card has been stored. The program stored in the recording medium allows a computer built in the electronic money card which is connected to a terminal apparatus of the user and connected to a bank server via a communication network to execute:
a payment supporting step wherein when a payment application in which at least a payment money amount has been designated is notified to the bank server by the terminal apparatus, the user's own telephone number and account number which have previously been stored are provided; and
a payment receiving step wherein when a payment date/time which has been set by changing a time lag from a payment application date/time in accordance with the payment money amount comes, if a communication is received from the bank server, establishment of a connection is confirmed, and payment of the electronic money is received.

The invention provides an electronic money system. The electronic money system comprises: a terminal apparatus of the user; an electronic money card having an interface which can be connected to the terminal apparatus and a wireless communication function; and a bank server which is connected to the terminal apparatus e.g. via the Internet and connected to the electronic money card via a wireless communication network, wherein a payment application in which a payment money amount and a payment date/time which has been set by changing a time lag from a payment application date/time in accordance with the payment money amount have been designated is notified to the bank server from the terminal apparatus, when the payment date/time comes, communication is made from the bank server to the electronic money card, establishment of a connection is confirmed, and payment of the electronic money is executed.

According to another aspect of an electronic money system of the invention, the system comprises: a terminal apparatus of the user; an electronic money card having an interface which can be connected to the terminal apparatus and a wireless communication function; and a bank server which is connected to the terminal apparatus e.g. via the Internet and connected to the electronic money card via a wireless network,
wherein a payment application in which a payment money amount has been designated is notified to the bank server from the terminal apparatus, a payment date/time is set by changing a time lag from a payment application date/time in accordance with the payment money amount accepted by the bank server, when the set payment date/time comes, communication is made from the bank server to the electronic money card, establishment of a connection is confirmed, and payment of the electronic money is executed.

Reference will now be made, by way of example only, to the accompanying drawings in which:
Fig. 1 is an explanatory diagram of a bank online cash system to which the invention is applied;
Fig. 2 is an external explanatory view of an electronic money card which is used in the invention;
Fig. 3 is a block diagram showing an internal construction of the electronic money card in Fig. 2;
Fig. 4 is an explanatory diagram of a memory area in Fig. 3;
Figs. 5A and 5B are block diagrams showing a functional construction of the invention corresponding to the system of Fig. 1;
Figs. 6A to 6C are time charts for a processing procedure for electronic money payment according to the invention;
Figs. 7A and 7B are flowcharts for an electronic money processing program of the invention which is executed by a bank server;
Figs. 8A and 8B are flowcharts for an electronic money processing program of the invention which is executed by a terminal apparatus; and
Figs. 9A and 9B are flowcharts for a processing program of the invention which is executed by the electronic money card.

In the following, a preferred embodiment of the invention will be described with reference to a Personal Handyphone System (PHS) as an example. However, the invention is not limited to use with PHS and may employ any wireless communication system capable of exchanging messages, such as GSM, pager networks etc. Further, the invention need not employ a primary voice channel within such a system, but may instead employ a signalling channel provided in the system. In addition, a combination of a fixed-line and wireless networks (including short-range wireless networks) may be used.

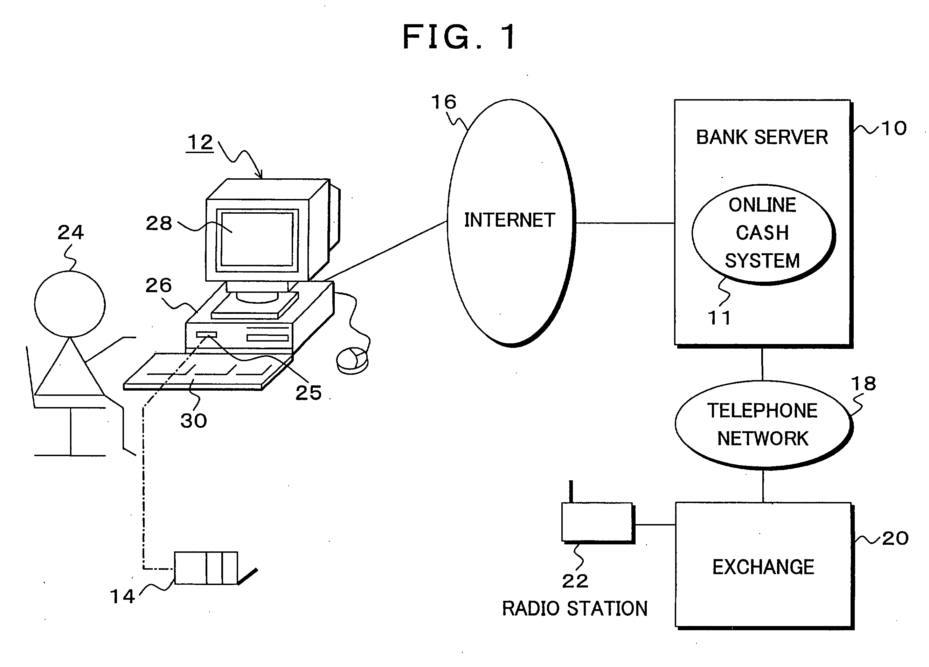

Fig. 1 is a system constructional diagram of a bank online cash system to which a processing method for an electronic money system of the invention is applied. A bank server 10 is provided with an online cash system 11 having the electronic money system of the invention. A terminal apparatus 12 of a user 24 is connected as a client to the bank server 10 via an Internet 16. The terminal apparatus 12 is a personal computer or the like and comprises a main body 26, a display unit 28 such as a color display, and an operation unit 30 having a keyboard, a mouse, and the like. Further, the main body 26 has a card slot 25 into which a card is inserted and connected via a PCMCIA interface. The user 24 has a PHS electronic money card 14 in order to use the online cash system 11 of the bank server 10. Electronic money processing software has been installed as ROM software into the PHS electronic money card 14. The PHS electronic money card 14 has a PHS (simple Personal Handyphone System) function and a PCMCIA (Personal Computer Memory Card International Association) interface which is inserted and connected into the card slot 25 of the terminal apparatus 12 in order to input and output data to/from an outside. The bank server 10 is connected to a PHS telephone network in order to execute input/output processes via the PHS function of the PHS electronic money card 14. The PHS telephone network is constructed by a telephone network 18, an exchange 20, and a radio station 22. According to the processing method for the electronic money system of the invention, in a state where the user 24 has inserted and connected the PHS electronic money card 14 into the card slot 25 of the terminal apparatus 12, the user accesses a homepage of the bank server 10 via the Internet 16. After user authentication is obtained by using a screen of the homepage downloaded from the bank server 10, the terminal apparatus is subjected to switching by a download of a withdrawal screen. A request for payment from a bank account to the PHS electronic money card 14 is made to the online cash system 11 of the bank server 10 via the Internet 16. A feature of the payment request in the processing method for the electronic money system of the invention is as follows. Payment application in which a payment money amount and a payment date/time have been designated is made from the terminal apparatus 12 to the bank server 10. In the bank server 10 which accepts the payment application, when a payment term designated by the user 24 comes, the PHS electronic money card 14 is directly called by the PHS telephone network, payment is executed after waiting for an automatic response. Therefore, a time lag exists in a time interval from the payment application by the user to the payment execution from the bank server 10 to the PHS electronic money card 14. Security against loss or theft of the PHS electronic money card 14 is assured by such a time lag.

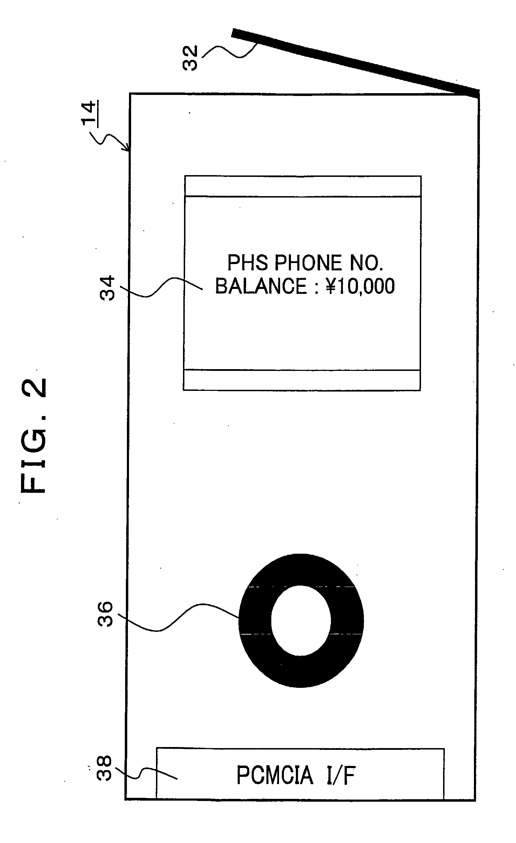

Fig. 2 is an external explanatory view of the PHS electronic money card in Fig. 1. The PHS electronic money card 14 has an antenna 32, at one end, which is used for radio transmission of the PHS telephone network and PHS transceiver transmission of an electronic register, an automatic vending machine, an automatic ticket gate, or the like. An information display apparatus 34 and a button apparatus 36 are provided on the card surface. The information display apparatus 34 uses a display such as an LCD or the like of a low electric power consumption type. In a normal mode, a PHS phone number and a present balance of electronic money are displayed as shown in the diagram. The button apparatus 36 transmits its own PHS phone number to a partner apparatus such as electronic register, automatic vending machine, automatic ticket gate, or the like and activates an access by using a built-in PHS transceiver function. At this time, a situation of the transmission and reception of the electronic money is displayed on the information display apparatus 34. A PCMCIA interface 38 is provided on the reverse side of the card. By inserting the portion of the PCMCIA interface 38 into the card slot 25 of the terminal apparatus 12 in Fig. 2, information can be transmitted and received to/from the PHS electronic money card 14.

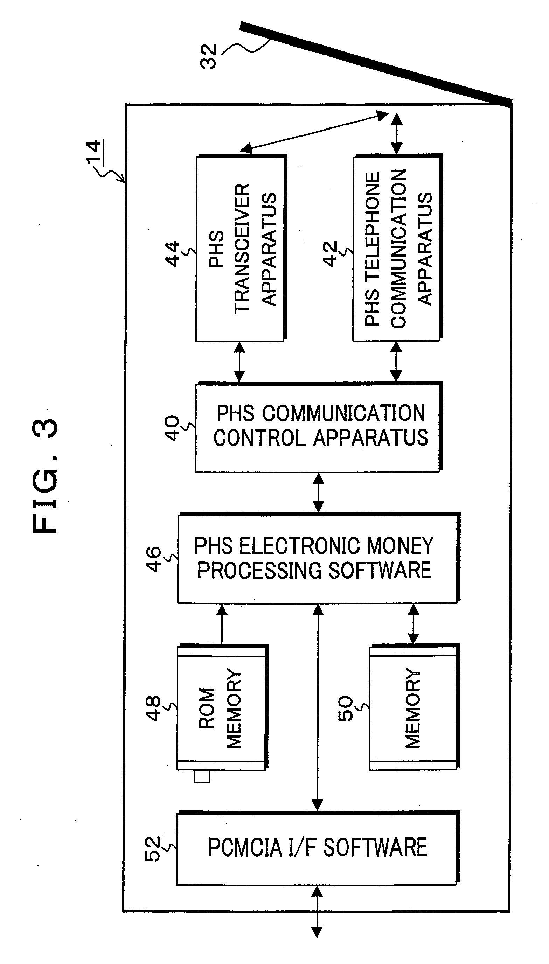

Fig. 3 is a block diagram showing a hardware construction of the PHS electronic money card 14. A PHS communication control apparatus 40 and a PHS telephone communication apparatus 42 are provided for the PHS electronic money card 14 in order to make PHS communication. Information can be transmitted and received to/from the PHS telephone network by a telephone talk connection by using the antenna 32. A PHS transceiver apparatus 44 is provided for the PHS communication control apparatus 40. By the PHS transceiver apparatus 44, information is transmitted and received to/from the partner apparatus such as electronic register, automatic vending machine, automatic ticket gate, or the like serving as a payment destination of the electronic money. A processing function of the PHS electronic money card 14 is realized by PHS electronic money processing software 46. Specifically speaking, the portion of the PHS electronic money processing software 46 is a portion where the program is executed by an MPU. Actually, a set of software for processing electronic money information has been stored in an ROM memory 48. By executing necessary software on the MPU, the function of the PHS electronic money processing software 46 is realized. Information regarding the electronic money has been stored in a memory 50. A DRAM is used as a memory 50. Further, PCMCIA interface software 52 is provided. In a state where it has been inserted and connected into the card slot 25 of the terminal apparatus 12 as shown in Fig. 2, necessary information can be transmitted and received between the PHS electronic money processing software 46 and the electronic money processing software on the terminal apparatus side.

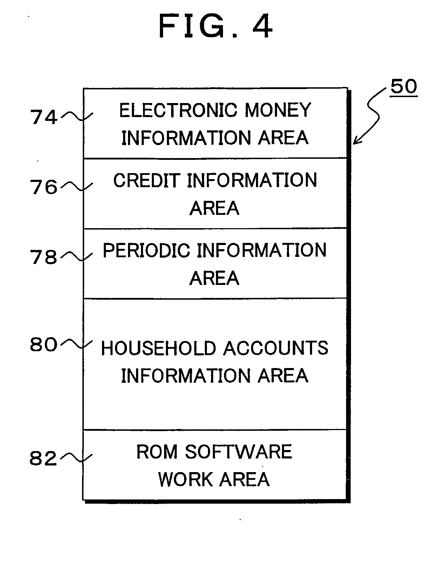

Fig. 4 is an explanatory diagram of management information in the memory 50 provided for the PHS electronic money card 14 in Fig. 3. An area of the memory 50 is constructed by an electronic money information area 74, a credit information area 76, a periodic information area 78, a household accounts information area 80, and further, an ROM software work area 82. As information necessary for the processing method for the electronic money system of the invention, a bank account number and a PHS phone number of the user and, further, the electronic money balance have been stored in the electronic money information area 74. Sex and birthday have been stored as attribute information of the user in the electronic money information area 74. Further, in order to write boarding start information at the time of boarding to a train, a bus, a freeway, or the like and pay a charge at the time of alighting by electronic money, the boarding start information can be stored into the electronic money information area 74. A company code for identifying a credit company, a credit number, and a validity term are stored in the credit information area 76. The following detailed information is, for example, stored into the periodic information area 78: that is, a code of a company which pays for a charge for a commutation ticket or a coupon ticket; a code of a vehicle kind such as train, bus, automobile, taxi, airplane, or the like; a purchase kind code for identifying whether a ticket is a commutation ticket, a coupon ticket, or a passenger ticket; information of a boarding period of the commutation ticket or coupon ticket; information of a boarding interval of the commutation ticket or coupon ticket; a degree of purchase of the coupon ticket; purchaser's discount information; and the like The following information is stored into the household accounts information area 80: that is, a division showing a kind of payment or reception; a date/time; a kind indicative of an electronic money withdrawal from an ATM, an electronic money withdrawal in an online manner, a charge payment of a PHS electronic money card, an Internet payment by the PHS electronic money card, or the like; a telephone number on the partner PHS electronic money side who paid the charge; money amount information showing whether the charge is a payment charge or a withdrawal charge; shop information of a shop in which the charge was paid by the electronic money; article information of the article paid by the electronic money; his own personal identification number of the user who uses an Internet online shop; a personal identification number of the partner side who uses an Internet online shop; a payment completion display which is turned on in the case where a charge payment notification is received from a payment destination partner and the charge is paid in case of the kind indicative of the Internet payment by PHS electronic money (PHS-ON); and the like. Naturally, an information area regarding another electronic money use is provided into the memory 50 within an available range of a memory capacity as necessary.

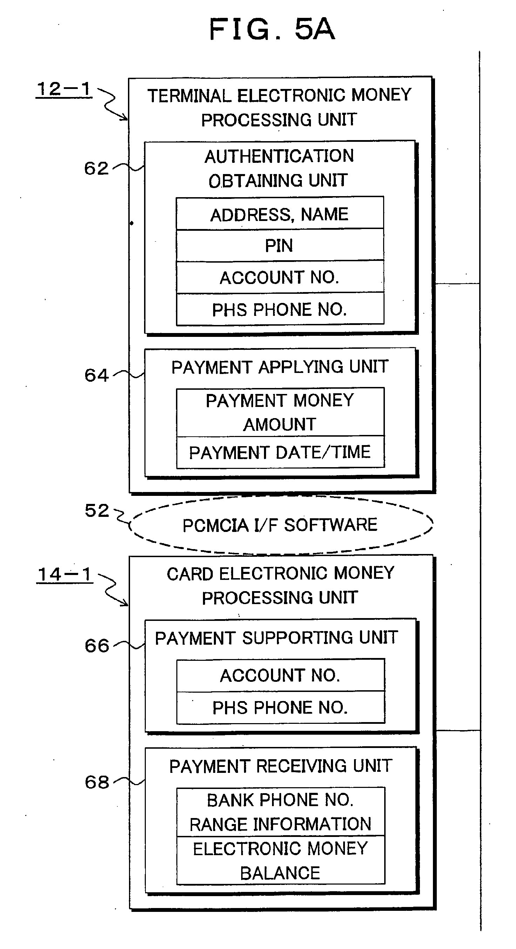

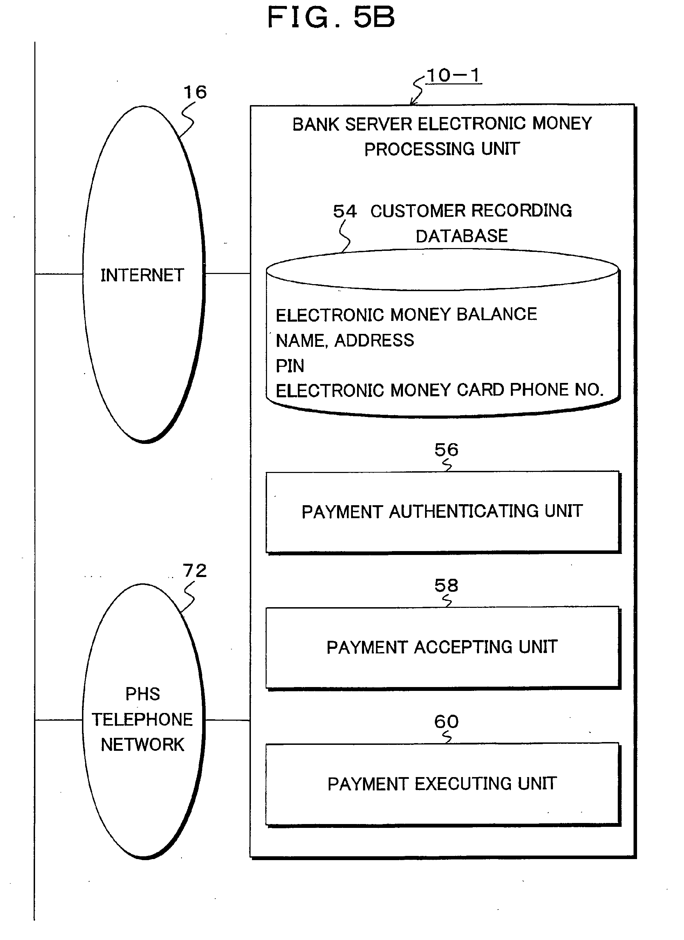

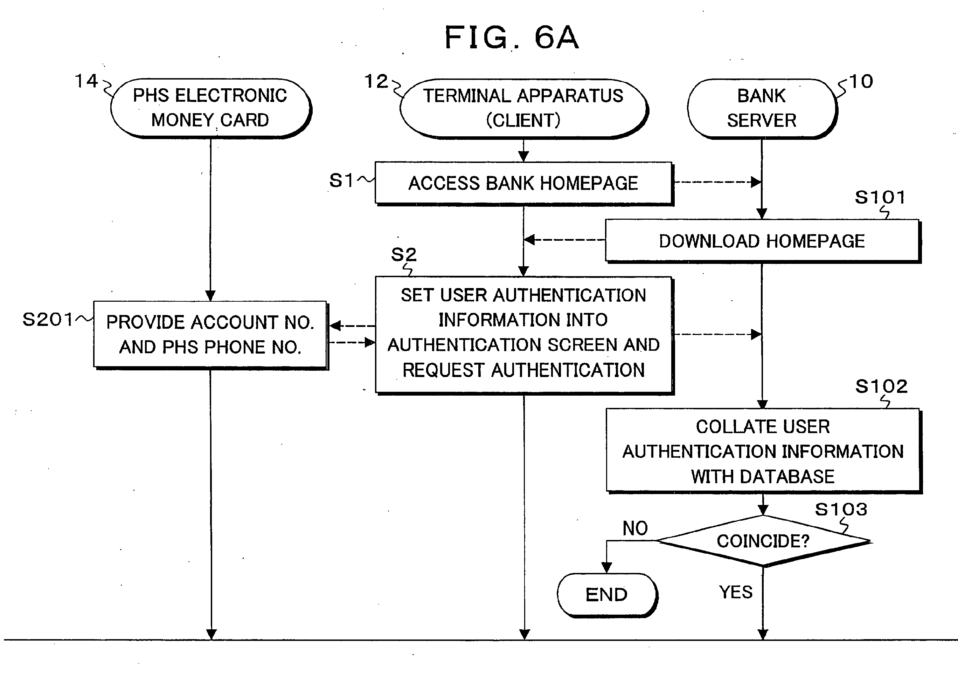

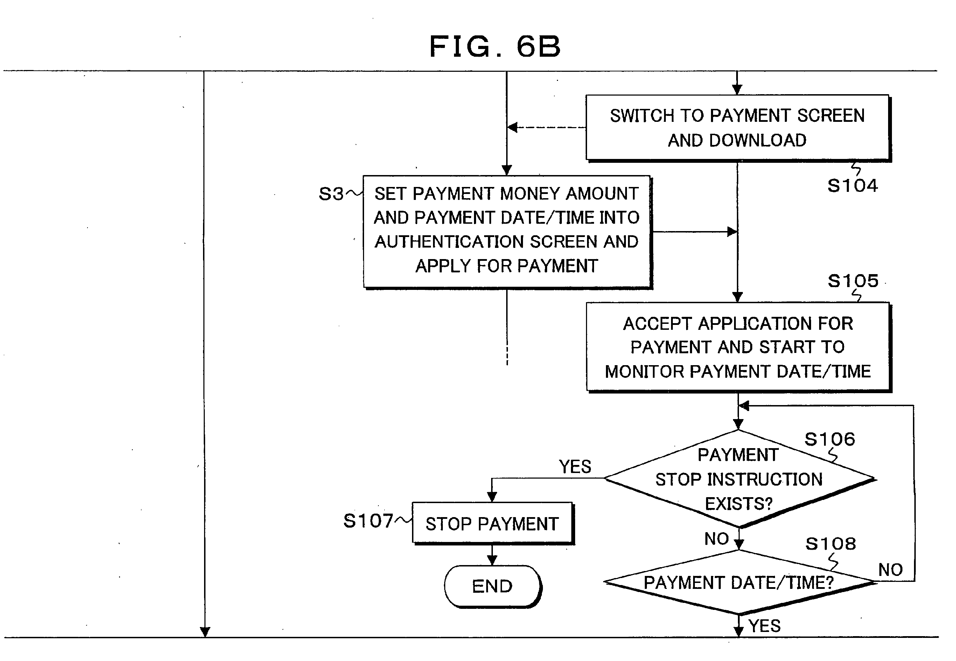

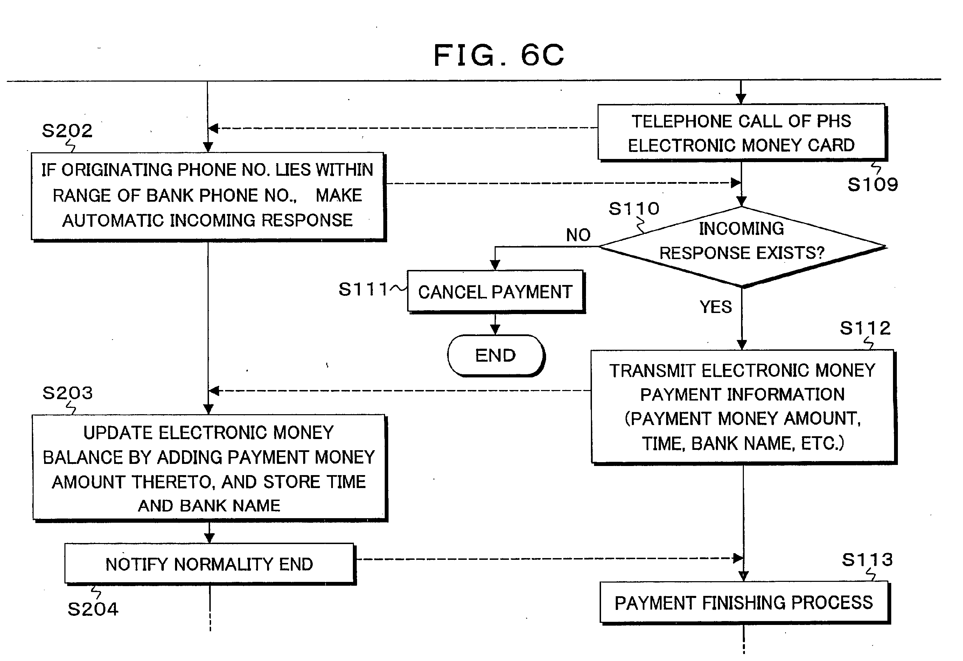

Figs. 5A and 5B are block diagrams of a functional construction of each of the bank server, terminal apparatus, and PHS electronic money card in the processing method for the electronic money system according to the invention corresponding to the system construction of Fig. 1. Functions as a bank server electronic money processing unit 10-1 of the invention are provided for the online cash system 11 provided for the bank server 10 in Fig. 1. Functions as a terminal electronic money processing unit 12-1 are provided for the terminal apparatus 12 of the user. Further, functions as a card electronic money processing unit 14-1 are provided for the PHS electronic money card 14. The functions of the card electronic money processing unit 14-1 construct a part of the PHS electronic money processing software 46 shown in Fig. 3. A customer recording database 54 is provided for the bank server electronic money processing unit 10-1. A user account number, a name, an address, a personal identification number, and an electronic money card telephone number have been stored every use customer into the customer recording database 54. In order to accept payment application of the user and execute payment to the PHS electronic money card 14, functions of a payment authenticating unit 56, a payment accepting unit 58, and a payment executing unit 60 are provided for the bank server electronic money processing unit 10-1. An authentication obtaining unit 62 and a payment applying unit 64 are provided for the terminal electronic money processing unit 12-1 in the terminal apparatus 12 of the user. When the payment is applied for to the bank server 10 by using the terminal electronic money processing unit 12-1, the PHS electronic money card 14 is inserted and connected into the card slot 25 of the terminal apparatus 12 as shown in Fig. 1. In this state, the card electronic money processing unit 14-1 is connected to the terminal electronic money processing unit 12-1 via the PCMCIA interface 38 as shown in Fig. 6. Further, the terminal electronic money processing unit 12-1 is connected to the bank server electronic money processing unit 10-1 via the Internet 16. The card electronic money processing unit 14-1 is connected to the bank server electronic money processing unit 10-1 via a PHS telephone network 72. A paying process by the online cashing in the processing method for the electronic money system in the invention is mainly classified into the following two processes.
(1) Payment application
(2) Payment execution
A time lag is purposely provided between those two processes. The authentication obtaining unit 62 and payment applying unit 64 provided for the terminal electronic money processing unit 12-1 make the payment application for the PHS electronic money card 14 to the bank server 10 side. Prior to the payment application, the authentication obtaining unit 62 first obtains authentication for the payment application from the bank server electronic money processing unit 10-1. Specifically speaking, when the homepage of the bank server 10 is accessed from the terminal apparatus 12 and the item of the payment is selected from a menu screen, the screen is switched to an authentication obtaining screen. By using the authentication obtaining screen, the user sets the address, name, and personal identification number as shown in the authentication obtaining unit 62. Although the account number and the PHS phone number are necessary upon obtaining of the authentication, the authentication is automatically obtained by accessing a payment supporting unit 66 via the PCMCIA interface 38 from the card electronic money processing unit 14-1 on the PHS electronic money card 14 side connected to the card slot 25. Therefore, with respect to the setting of the user authentication information upon obtaining of the authentication, the user does not need to input and set the account number and the PHS phone number and they can be automatically inputted and set from the card side. If the user authentication information could be set as mentioned above, the user makes an authenticating request to the bank server electronic money processing unit 10-1 via the Internet 16. In response to the authenticating request, the corresponding user account number, name, address, personal identification number, and electronic money card telephone number are obtained from the user authentication information received by the payment authenticating unit 56 and the customer recording database 54, thereby collating the user. When coincidence is obtained as a result of the collation, a payment application screen is downloaded to the terminal electronic money processing unit 12-1, thereby allowing the unit 12-1 to switch the screen. By the download from the server 10 side, the screen on the terminal apparatus 12 side is switched to the screen for payment application. The function of the payment applying unit 64 in the terminal electronic money processing unit 12-1 is constructed. Therefore, the user sets two items "payment money amount" and "payment date/time" by using the switched screen for payment. Upon setting of the payment application information in the invention, although the user inputs and sets the "payment money amount" as necessary, either a "real-time payment" or a "payment date/time" by the user setting can be selected with respect to the "payment date/time". In the normal payment application, the payment date/time by the setting input of the user is set. However, in case of urgency, the real-time payment can be selected. In the real-time payment, as for the time lag which is caused between the payment application and the payment execution, the execution of the payment to the PHS electronic money card 14 is completed within the minimum time which is determined by a communicating process for application by the Internet 16, a processing time on the server side, and a transmitting time by the PHS telephone network 72. The payment date/time can be also changed by the function of the payment applying unit 64 in accordance with the payment money amount set by the user. For example, if the payment money amount is less than 50,000 yen, the real-time payment is also enabled to be selected. If the payment money amount lies within a range between 50,000 yen and an amount less than 100,000 yen, the time lag is set to 3 days. If the payment money amount is equal to or larger than 100,000 yen, the time lag is set to 5 days. In this manner, the payment date/time is set in a manner such that as the payment money amount is larger, the time lag between the payment application date/time and the payment execution date/time is increased. Thus, the time lag between the payment application and the payment execution is extended when the payment money amount is large, thereby certainly assuring the security in the case where loss or theft of the PHS electronic money card 14 occurred for the time interval from the payment application to the payment execution. The payment information of the payment money amount and payment date/time set by the user is transmitted to the bank server electronic money processing unit 10-1 via the Internet 16 and processed by the payment accepting unit 58. The payment accepting unit 58 recognizes the payment money amount from the received payment application information, recognizes the payment date/time, and subsequently activates a monitoring process until the date/time reaches the designated payment date/time. When the payment applying operation as mentioned above is finished, the user removes the PHS electronic money card 14 from the terminal apparatus 12. When the user goes out or the like, he carries the PHS electronic money card 14 and makes payment by the electronic money by using the built-in transceiver function in case of the payment for purchase, the payment at a ticket gate of transport facilities, or the like. In the bank server electronic money processing unit 10-1, when the date/time reaches the payment date/time set by the application acceptance in the payment accepting unit 58, the payment executing unit 60 is activated, thereby executing the payment by accessing the card electronic money processing unit 14-1 of the PHS electronic money card 14 by using the PHS telephone network 72. Upon execution of the payment, the PHS electronic money card 14 is directly called via the PHS telephone network 72 by the originating operation based on the electronic money card phone number recognized by the payment application. In response to such a call from the bank server 10 side, a payment receiving unit 68 of the card electronic money processing unit 14-1 automatically responds. The automatic response by the payment receiving unit 68 is made under the following conditions. That is, the telephone number of the originator is compared with bank phone number range information which has previously been written in the memory 50 of the PHS electronic money card 14. If the telephone number of the originator lies within the bank phone number range, it is determined that the telephone call is a call from the bank server electronic money processing unit 10-1, and an incoming response is automatically started. As with bank phone number range information which is used for discriminating the call from the bank server 10, for example, two kinds of numbers of a lower limit (11 digits) of a bank phone number band and an upper limit (11 digits) of a bank phone number band are written into the ROM memory 48 of the PHS electronic money card 14. If the telephone number of the originator lies within a range between the lower limit bank phone number band and the upper limit bank phone number band, it is decided that the telephone call is a call from the correct bank server, and an incoming response is automatically started. If the incoming response is obtained by the calling to the PHS electronic money card 14, since a telephone talk connection via the PHS telephone network 72 is established, the payment executing unit 60 transmits the electronic money payment information by using this connecting state. The electronic money payment information includes the payment money amount, time information, and bank name. The payment receiving unit 68 of the card electronic money processing unit 14-1 which received the payment information from the bank server 10 side updates an electronic money balance by adding the received payment money amount to a present electronic money balance and, further, stores the time information and the payment information such as a bank name and the like. If the PHS electronic money card 14 is lost or stolen after the payment application was made from the terminal apparatus 12 to the bank server 10, a procedure to stop the payment execution is taken. The procedure to stop the payment execution includes, for example, the following two steps.
(1) The user contacts a main bank having the payment account of the PHS electronic money card and requests the payment stop because of the loss or theft.
(2) The user contacts a telephone company of the PHS telephone network and requests the telephone talk stop of the PHS telephone because of the loss or theft.

If the main bank receives the payment stop notice from the user, by executing the payment stopping operation with respect to the relevant account number, the payment execution by the monitoring of the payment term set by the acceptance of the application made by the payment accepting unit 58 of the bank server electronic money processing unit 10-1 is cancelled. Therefore, even if the payment date/time comes, payment is not performed from the bank server 10 side to the lost or stolen PHS electronic money card 14. By setting the time lag between the payment application date/time and the payment execution date/time so as to be longer in accordance with the payment money amount, a time margin in which the procedure to stop the payment execution can be taken is extended in accordance with the money amount.

When the stop of the PHS telephone is applied, even if the payment accepting unit 58 in the bank server electronic money processing unit 10-1 activates the payment executing unit 60 when the accepted payment date/time comes and the originating operation is performed to the PHS electronic money card 14 by the PHS telephone network 72, since the procedure for stopping the telephone talk has already been taken in its exchange, a telephone talk connection to the PHS electronic money card 14 by the PHS telephone network 72 cannot be established. The payment to the lost or stolen PHS electronic money card 14 is not executed.

Figs. 6A to 6C are time charts showing a procedure in a range between the payment application and the payment execution in the electronic money system of the invention with respect to the processes and transmission/reception which are executed among the bank server 10, terminal apparatus 12, and PHS electronic money card 14. In Fig. 6A, first, the terminal apparatus 12 accesses the home page of the bank server 10 via the Internet 16 in step S1. In response to it, the bank server 10 downloads the homepage in step S101, a menu screen for performing transaction of the online cash system is displayed in the terminal apparatus 12. Therefore, when the user selects "payment" from the menu screen, the screen is switched to an "authentication screen". In step S2, the user authentication information is set onto the authentication screen and an authenticating request is made to the bank server 10. At this time, the PHS electronic money card 14 has been inserted and connected to the card slot 25 of the terminal apparatus 12. The account number and PHS phone number in the user authentication information are automatically provided in response to the access from the terminal apparatus 12 in step S201. The bank server 10 which received the user authentication information from the terminal apparatus 12 collates the received user authentication information with the database in step S102. If the coincidence is obtained as a result of the collation in step S103, step S104 follows. The screen is switched to the payment screen, it is downloaded, and the payment screen is displayed on the terminal apparatus 12 side. If the coincidence as a collation result of the user authentication information is not obtained in step S103, the illegal use is determined and the bank server 10 finishes the process. In the terminal apparatus 12 which received the download and in which the screen has been switched to the payment screen, in step S3, the payment money amount and the payment date/time are set onto the switched payment screen and the payment application is made. When the payment date/time is set, duration of the time lag in the interval from the payment application date/time to the payment execution date/time in which the processes in steps S2 and S3 are executed is changed in accordance with the money amount. When the payment application from the terminal apparatus 12 is received, the bank server 10 starts to monitor the accepted payment date/time in step S105. Subsequently, in Figs. 6B and 6C, whether a payment stop instruction has been issued or not is discriminated in step S106. If NO, whether the payment date/time has come or not is discriminated in step S108. The checking processes in steps S106 and S108 are repeated. If the PHS electronic money card 14 is lost or stolen after the payment was applied for, the user requests the main bank to stop the payment, so that it is determined that the payment stop has been instructed in step S106. In this case, step S107 follows, a payment stopping process is executed, and the payment execution is cancelled. If it is decided in step S108 that whether the payment date/time has come, the bank server 10 makes a telephone call of the PHS electronic money card 14 in step S109. In step S202, the PHS electronic money card 14 which received the telephone call compares the phone number of the originator with the bank telephone number range which has previously been held. If it lies within the range, an automatic incoming response is made, so that the telephone talk connection is established. When the bank server 10 confirms the incoming response from the card 14 side in step S110, step S112 follows and the payment money amount, time, bank name, and the like are transmitted as bank money payment information. If the PHS electronic money card 14 is lost or stolen after the payment was applied for and the user has already applied for the stop of the telephone talk to the PHS telephone company, a countermeasure for stopping the telephone talk is taken in the PHS telephone network in response to the telephone call to the lost or stolen PHS electronic money card 14 in step S109. If the telephone talk connection with the card 14 side is not established and it is determined that there is no telephone talk response in step S110, step S111 follows and the bank server 10 cancels the payment execution. If the electronic money payment information is normally transmitted in step S112, the PHS electronic money card 14 updates the electronic money balance by adding the payment money amount obtained from the received electronic money payment information to the present electronic money balance and further stores the time and the bank name. In step S204, a normality end is notified and the telephone talk connection is disconnected. When the normality end notice from the card side is received, the bank server 10 executes a payment finishing process in step S113.

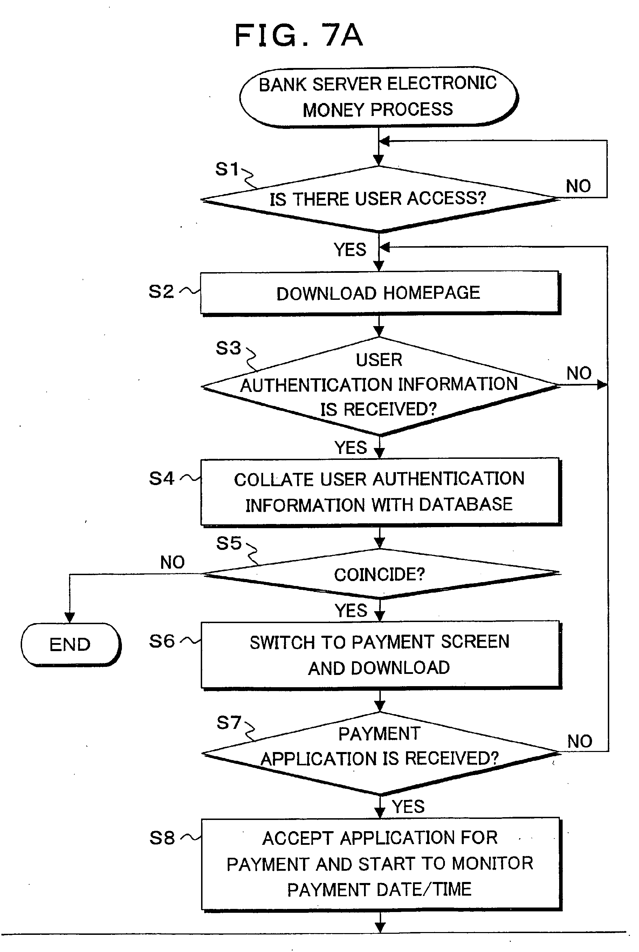

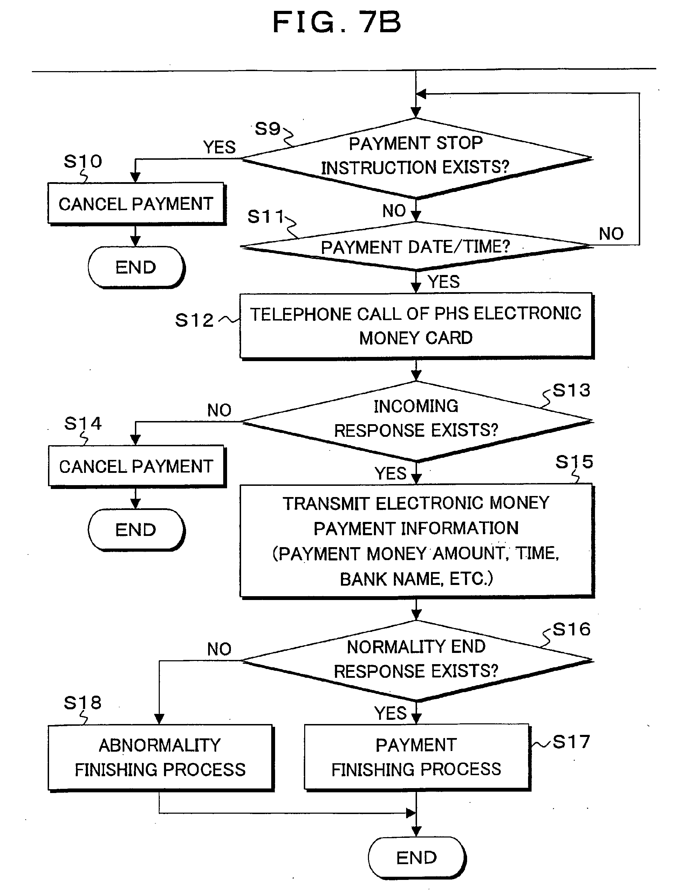

Figs. 7A and 7B are flowcharts for an electronic money processing program which is executed by the bank server 10. In Fig. 7A, the bank server 10 checks a user access in step S1. When there is a user access, the homepage is downloaded in step S2. Subsequently, in step S3, the bank server 10 discriminates whether the user authentication information has been received or not. If the user authentication information is received, it is collated with the database in step S4. If a coincidence is obtained as a collation result in step S5, the screen is switched to the payment screen and the payment screen is downloaded in step S6. If the coincidence is not obtained, the processing routine is finished. In step S7, whether the payment application has been received or not is discriminated. If it is received, the payment application is accepted and the monitoring of the payment date/time is started in step S8. Subsequently, the presence or absence of the payment stop instruction is discriminated in step S9 in Fig. 7B. If there is no stop instruction, whether the payment term has come or not is discriminated in step S11. If the payment stop instruction was issued before the payment term comes, the payment is cancelled in step S10. If the payment date/time comes, a telephone call of the PHS electronic money card 14 is made in step S12. If there is the incoming response in step S13, electronic money payment information such as payment money amount, time, bank name, and the like is transmitted in step S15. If there is no incoming response in step S13, the payment is cancelled in step S14. Upon discrimination in the case where there is no incoming response in step S13, when there is no incoming response in case of the telephone talk stop due to the loss, theft, or the like, the payment is immediately cancelled in step S14. However, in the case where the user does not exist in a communication area of the PHS telephone network, the telephone call in step S12 is made the predetermined number of times every elapse of a predetermined time. If the incoming response is not obtained even after the telephone call was made the predetermined number of times, the payment is cancelled in step S14. After the electronic money payment information is normally transmitted in step S15, the system waits for the reception of a normality end response from the card side in step S16. If the normality end response is received, the paying process is finished in step S17. If there is no normality end response in step S16, an abnormality finishing process is executed in step S18. In the abnormality finishing process, abnormality contents are recorded and the fact that the payment was cancelled is recorded.

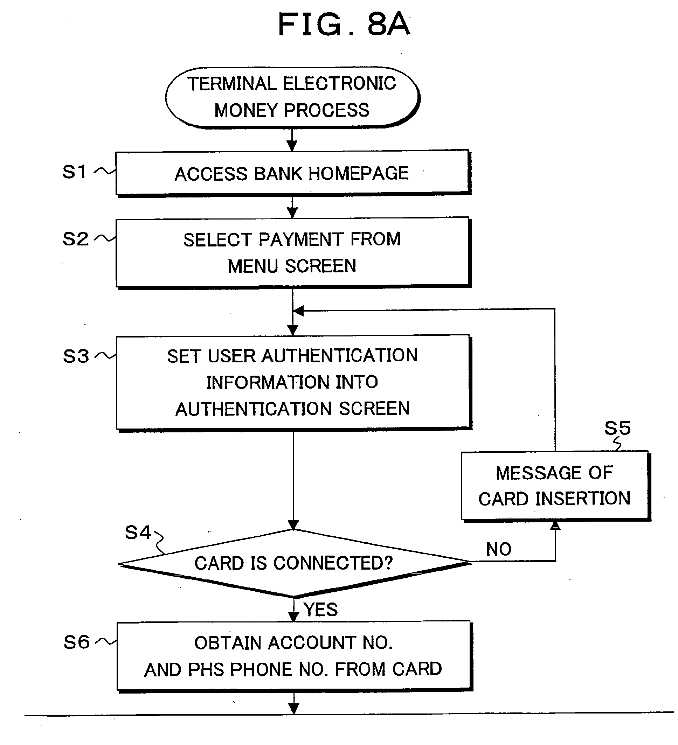

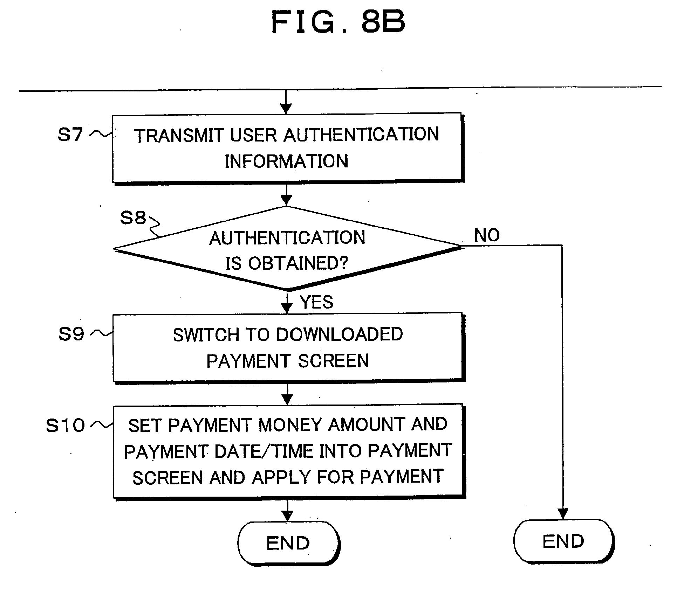

Figs. 8A and 8B are flowcharts for the electronic money processing program of the invention which is executed in the terminal apparatus 12. When the payment is received to the PHS electronic money card 14, the terminal apparatus 12 accesses the homepage of the bank in step S1 in a state where the card has been inserted and connected into the card slot 25 of the terminal apparatus 12, and selects "payment" in step S2 from a menu screen thus obtained. Since the screen is switched to an authentication screen by the selection of the payment, the user authentication information is set into the authentication screen in step S3. At this time, whether the card has been connected or not is discriminated in step S4. If the card has been connected, the account number and the PHS phone number are obtained from the PHS electronic money card 14 in step S6. If the card is not connected, a message for card insertion is displayed in step S5, thereby urging the user to insert the card. Therefore, the system uses a mechanism such that unless the PHS electronic money card 14 is inserted and connected to the terminal apparatus 12, the payment from the bank account to the card cannot be applied for. Naturally, as another embodiment, it is also possible to use a mechanism such that even if the card is not inserted, the account number and the PHS phone number are set and inputted on the authentication screen by the setting/inputting operation of the user, thereby applying for the payment. If the account number and the PHS phone number can be obtained from the card 14 side in step S6, the user authentication information is transmitted to the bank server 10 in step S7. When the authentication is received from the bank server 10 in step S8, the screen is switched to the downloaded payment screen and displayed on the basis of the obtained authentication in step S9. In step S10, the payment money amount and the payment date/time are set into the payment screen and the payment is applied for to the bank server 10. A series of payment applying processes is finished. Naturally, if the authentication is not received from the bank server 10 in step S8, the processing routine is finished.

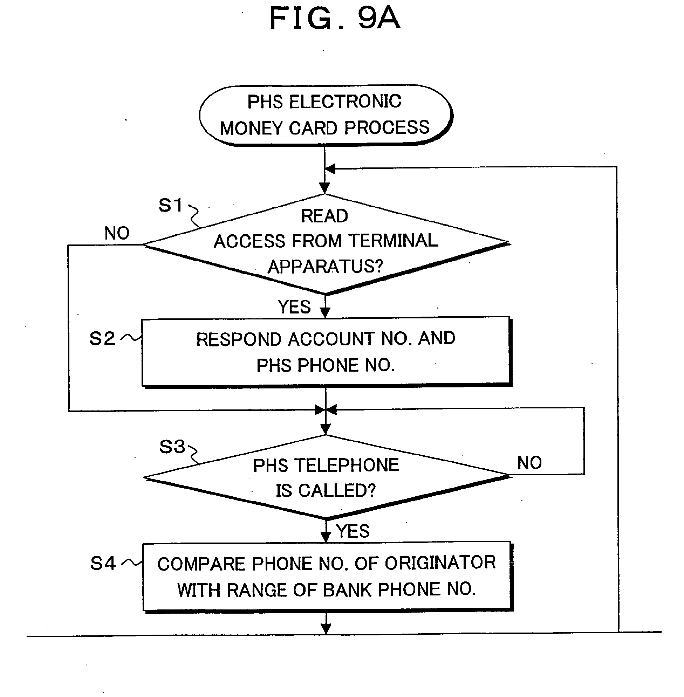

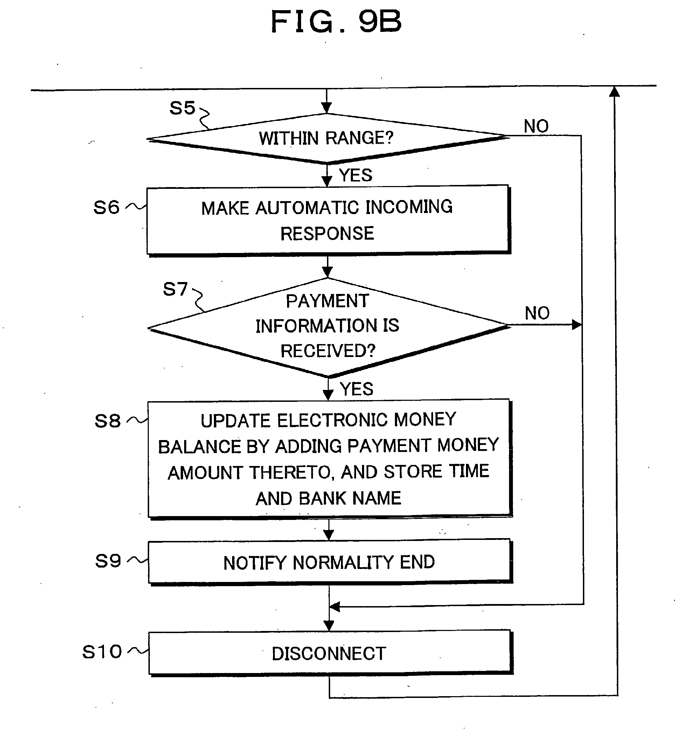

Figs. 9A and 9B are flowcharts for a processing program of the invention which is executed by the PHS electronic money card 14. In the PHS electronic money card 14, whether there is a read access from the terminal apparatus 12 or not is discriminated in step S1. If there is the read access, a response of the account number and the PHS phone number is made in step S2. In step S3, whether there is a PHS telephone call from the bank server 10 or not is discriminated. If there is the telephone call, in step S4, the phone number of the originator is compared with the bank telephone number range which has previously been stored. If it is determined in step S5 that the phone number of the originator lies within the range as a result of the comparison, an automatic incoming response is made in step S6. Subsequently, in step S7, whether the payment information has been received from the bank server 10 or not is discriminated. If it is received, the electronic money balance is updated by adding the payment money amount to the present electronic money balance and, thereafter, the time and the bank name are stored in step S8. The bank server is notified of the normality end in step S9 and the telephone talk connection is subsequently disconnected in step S10. If the phone number of the originator is out of the bank telephone number range in step S5 or if the payment information is not received from the bank server side in step S7, the telephone talk connection is disconnected in step S10.

The invention provides a recording medium in which the program for the electronic money process in each of the bank server 10, terminal apparatus 12, and PHS electronic money card 14 has been recorded. An embodiment of the computer-readable recording medium in which each of the processing programs has been stored will be explained hereinbelow. Each of the processing programs has been recorded in a portable recording medium such as CD-ROM, floppy disk (R), DVD disk, magnetooptic disk, IC card, or the like, a database connected via a telephone line by using a modem, an LAN interface, or the like, or a database of another computer system. Each of the processing programs is installed into the bank server 10, terminal apparatus 12, and PHS electronic money card 14 having the functions as a computer and, thereafter, executed. Besides the portable recording medium such as CD-ROM, floppy disk (R), DVD disk, magnetooptic disk, IC card, or the like, the recording medium incorporates a storage device such as hard disk, memory, or the like provided in/out of the computer, a database for holding the programs via the line, another computer, its database, and further, a transmission medium on the line.

As another embodiment of the invention, with respect to the time lag between the payment application date/time and the payment execution date/time, only the payment money amount is transmitted from the payment applying unit 64 of the terminal apparatus 12 to the bank server 10. The payment accepting unit 58 which received the data of the payment money amount determines the payment execution date/time on the basis of the time lag according to the money amount and returns it to the terminal apparatus 12. In this case, it is also possible to construct the system in a manner such that the payment executing unit 60 of the bank server 10 makes a decision on the payment execution date/time based on the time lag according to the money amount and the payment accepting unit 58 returns the decided payment execution date/time to the terminal apparatus 12.

As mentioned above, according to the invention, by providing the time lag between the payment application (transfer request) and the payment execution (actual transfer of funds to the card), even if the electronic money card is lost or stolen, by requesting the bank to stop the payment or requesting the communication network to stop the connection prior to the payment date/time, the execution of the payment to the lost or stolen electronic money card can be certainly prevented, and the security of the bank online cash system using the electronic money card can be remarkably improved.

If the payment request is made via the Internet, a possibility remains that the payment application is made illegally. However, upon execution of the payment, by requesting the communication network to stop the connection, even if the payment is illegally applied for, the stop of the connection via the communication network cannot be cancelled from an external unit. Therefore, high security can be assured against the illegal payment application in association with the loss or theft of the card.

Although the above embodiment has been described with respect to the example in the case where the PHS telephone function is provided for the electronic money card, naturally, the PHS telephone function can be also replaced with an ordinary mobile phone function.

Although the payment has been applied for via the Internet in the foregoing embodiment, any communication network other than the Internet can be also used. According to a desirable embodiment of the invention, it is sufficient to use networks such that the network for payment application and the network for payment execution are different. It is sufficient to provide a time lag between the payment application and the payment execution. Therefore, the invention is not limited by the kind of network.

Although the above embodiment has been described with respect to the example in the case where a personal computer of the user is used as a terminal apparatus which is used for payment application, a PAD (PDA, mobile terminal etc.) or, for example, an ordinary mobile phone can be used so long as it is equipment having the Internet connecting function.

The above embodiment has been described with respect to the example in the case where money is withdrawn from the bank and deposited in the electronic money card. However, also with respect to a purchase application and a payment execution upon Internet online shopping in other cases, similarly, by making the purchase application from the terminal apparatus via the Internet and by setting the payment date/time or presetting it with a time lag, the payment by the electronic money card by electronic money or a credit is executed. Also in this case, similarly, since there is a time lag between the purchase application and the payment execution, high security can be assured against the theft or loss of the electronic money card.

In addition, although in the above embodiment the electronic money card is connected to the terminal via a card slot, there is no need for any physical contact between the card and the terminal. The card may for example be retained in the user's wallet and coupled to the terminal by short-range wireless communication.

The invention is not limited to the foregoing embodiment but incorporates many proper modifications without losing the advantages of the invention. Further, the invention is not limited by the numerical values shown in the above embodiment.

As described above, the invention relates to an electronic money processing method for performing a card withdrawal of electronic money by an electronic money card having a simple mobile phone (Personal Handyphone System: PHS) function, a terminal apparatus of the user, and a bank server, a program for realizing such a method, and a recording medium. More particularly, the invention relates to an electronic money processing method which improves security by providing a time lag between application for payment by the Internet and execution of the payment by a mobile phone network, a program for realizing such a method, and a recording medium.

## Claims

1. An electronic money processing method for a bank server which is connected to a terminal apparatus of the user via the Internet and connected via a mobile phone network to an electronic money card having an interface that can be connected to said terminal apparatus and a mobile phone function, comprising:
a payment accepting step wherein payment application in which a payment money amount and a payment date/time which has been set by changing a time lag from a payment application date/time in accordance with said payment money amount have been designated is received from said terminal apparatus; and
a payment executing step wherein when said payment date/time comes, a telephone call is made to said electronic money card, establishment of a telephone talk connection is confirmed, and payment of the electronic money is executed.

2. A method according to claim 1, wherein in said payment accepting step, as said payment date/time, said terminal apparatus is notified of a selection screen of real-time payment and a designated payment date/time, thereby allowing the user to select either of them.

3. A method according to claim 1 or 2, wherein in said payment accepting step, the payment date/time which has been set in a manner such that as said payment money amount is larger, a time lag between said payment application date/time and a payment execution date/time is increased.

4. A method according to claim 1, 2, or 3, wherein in said payment accepting step, prior to accepting the payment, predetermined user authentication information including an account number and a telephone number obtained from said electronic money card is received from said terminal apparatus and collated with a customer database, and when they coincide as a result of said collation, a next inputting process is authenticated.

5. A method according to claim 4, wherein said user authentication information includes a name, an address, and a personal identification number inputted by the user in addition to the account number and the telephone number obtained from said electronic money card.

6. A method according to any preceding claim, wherein in said payment executing step, if a telephone talk connection is not established in a telephone call to said electronic money card, the execution of the payment is stopped and the payment application is cancelled.

7. A method according to any preceding claim, wherein in said payment executing step, the execution of the payment is stopped by inputting a payment stop before said payment date/time, and the payment application is cancelled.

8. An electronic money processing method for a bank server which is connected to a terminal apparatus of the user via the Internet and connected via a mobile phone network to an electronic money card having an interface that can be connected to said terminal apparatus and a mobile phone function, comprising:
a payment accepting step wherein payment application in which a payment money amount has been designated is received from said terminal apparatus; and
a payment executing step wherein a payment date/time is set by changing a time lag from a payment application date/time at which said payment application has been received in accordance with said accepted payment money amount, when said payment date/time comes, a telephone call is made to said electronic money card, establishment of a telephone talk connection is confirmed, and payment of the electronic money is executed.

9. A method according to claim 8, further comprising the step of notifying said terminal apparatus of said set payment date/time.

10. A method according to claim 8 or 9, wherein in said payment executing step, as said payment money amount is larger, a time lag between said payment application date/time and a payment execution date/time is increased.

11. A method according to claim 8, 9 or 10, wherein in said payment accepting step, prior to accepting the payment, predetermined user authentication information including an account number and a telephone number obtained from said electronic money card is received from said terminal apparatus and collated with a customer database, and when they coincide as a result of said collation, a next inputting process is authenticated.

12. A method according to claim 11, wherein said user authentication information includes a name, an address, and a personal identification number inputted by the user in addition to the account number and the telephone number obtained from said electronic money card.

13. A method according to claim 8, 9, 10, 11, or 12, wherein in said payment executing step, if the telephone talk connection is not established in the telephone call to said electronic money card, the execution of the payment is stopped and the payment application is cancelled.

14. A method according to any of claims 8 to 13, wherein in said payment executing step, the execution of the payment is stopped by inputting a payment stop before said payment date/time, and the payment application is cancelled.

15. A program for processing electronic money, wherein
said program allows a computer constructing a bank server which is connected to a terminal apparatus of the user via the Internet and connected via a mobile phone network to an electronic money card having an interface that can be connected to said terminal apparatus and a mobile phone function to execute:
a payment accepting step wherein payment application in which a payment money amount and a payment date/time which has been set by changing a time lag from a payment application date/time in accordance with said payment money amount have been designated is received from said terminal apparatus; and
a payment executing step wherein when said payment date/time comes, a telephone call is made to said electronic money card, establishment of a telephone talk connection is confirmed, and payment of the electronic money is executed.

16. A program for processing electronic money, wherein said program allows a computer constructing a bank server which is connected to a terminal apparatus of the user via the Internet and connected via a mobile phone network to an electronic money card having an interface that can be connected to said terminal apparatus and a mobile phone function to execute:
a payment accepting step wherein payment application in which a payment money amount has been designated is received from said terminal apparatus; and
a payment executing step wherein a payment date/time is set by changing a time lag from a payment application date/time at which said payment application has been received in accordance with said accepted payment money amount, when said payment date/time comes, a telephone call is made to said electronic money card, establishment of a telephone talk connection is confirmed, and payment of the electronic money is executed.

17. A computer-readable recording medium in which a program for processing electronic money has been stored, wherein
said program allows a computer constructing a bank server which is connected to a terminal apparatus of the user via the Internet and connected via a mobile phone network to an electronic money card having an interface that can be connected to said terminal apparatus and a mobile phone function to execute:
a payment accepting step wherein payment application in which a payment money amount and a payment date/time which has been set by changing a time lag from a payment application date/time in accordance with said payment money amount have been designated is received from said terminal apparatus; and
a payment executing step wherein when said payment date/time comes, a telephone call is made to said electronic money card, establishment of a telephone talk connection is confirmed, and payment of the electronic money is executed.

18. A computer-readable recording medium in which a program for processing electronic money has been stored, wherein
said program allows a computer constructing a bank server which is connected to a terminal apparatus of the user via the Internet and connected via a mobile phone network to an electronic money card having an interface that can be connected to said terminal apparatus and a mobile phone function to execute:
a payment accepting step wherein payment application in which a payment money amount has been designated is received from said terminal apparatus; and
a payment executing step wherein a payment date/time is set by changing a time lag from a payment application date/time at which said payment application has been received in accordance with said accepted payment money amount, when said payment date/time comes, a telephone call is made to said electronic money card, establishment of a telephone talk connection is confirmed, and payment of the electronic money is executed.

19. An electronic money processing method for a terminal apparatus in which an electronic money card having an interface and a mobile phone function is connected to a card slot and which is connected via the Internet to a bank server that is connected to said electronic money card via a mobile phone network, comprising:
an authentication obtaining step wherein predetermined user authentication information including an account number and a telephone number obtained from said electronic money card is transmitted from said terminal apparatus to said bank server and authentication is obtained; and
a payment applying step wherein said bank server is notified of payment application in which a payment money amount and a payment date/time which has been set by changing a time lag from a payment application date/time in accordance with said payment money amount have been designated,
wherein when said payment date/time comes, a telephone call is made from said bank server to said electronic money card, establishment of a telephone talk connection is confirmed, and payment of the electronic money is executed.

20. A method according to claim 19, wherein in said payment applying step, real-time payment and a designated payment date/time are prepared as said payment date/time, thereby allowing the user to select either of them.

21. A method according to claim 19 or 20, wherein in said payment applying step, as said payment money amount is larger, a time lag between said payment application date/time and said payment date/time is increased.

22. A method according to claim 19, 20, or 21, wherein in said authentication obtaining step, said user authentication information includes a name, an address, and a personal identification number inputted by the user in addition to the account number and the telephone number obtained from said electronic money card.

23. An electronic money processing method for a terminal apparatus in which an electronic money card having an interface and a mobile phone function is connected to a card slot and which is connected via the Internet to a bank server that is connected to said electronic money card via a mobile phone network, comprising:
an authentication obtaining step wherein predetermined user authentication information including an account number and a telephone number obtained from said electronic money card is transmitted from said terminal apparatus to the bank server and authentication is obtained; and
a payment applying step wherein said bank server is notified of payment application in which a payment money amount has been designated,
wherein when a payment date/time which has been set by changing a time lag from a payment application date/time at which said payment application is received in accordance with said payment money amount accepted by said bank server comes, a telephone call is made to said electronic money card, establishment of a telephone talk connection is confirmed, and payment of the electronic money is executed.

24. A program for processing electronic money, wherein
said program allows a computer constructing a terminal apparatus in which an electronic money card having an interface and a mobile phone function is connected to a card slot and which is connected via the Internet to a bank server that is connected to said electronic money card via a mobile phone network to execute:
an authentication obtaining step wherein predetermined user authentication information including an account number and a telephone number obtained from said electronic money card is transmitted from said terminal apparatus to said bank server and authentication is obtained; and
a payment applying step wherein said bank server is notified of payment application in which a payment money amount and a payment date/time which has been set by changing a time lag from a payment application date/time in accordance with said payment money amount have been designated,
and wherein when said payment date/time comes, a telephone call is made from said bank server to said electronic money card, establishment of a telephone talk connection is confirmed, and payment of the electronic money is executed.

25. A program for processing electronic money, wherein
said program allows a computer constructing a terminal apparatus in which an electronic money card having an interface and a mobile phone function is connected to a card slot and which is connected via the Internet to a bank server that is connected to said electronic money card via a mobile phone network to execute:
an authentication obtaining step wherein predetermined user authentication information including an account number and a telephone number obtained from said electronic money card is transmitted from said terminal apparatus to the bank server and authentication is obtained; and
a payment applying step wherein said bank server is notified of payment application in which a payment money amount has been designated,
and wherein when a payment date/time which has been set by changing a time lag from a payment application date/time at which said payment application is received in accordance with said payment money amount accepted by said bank server comes, a telephone call is made to said electronic money card, establishment of a telephone talk connection is confirmed, and payment of the electronic money is executed.

26. A computer-readable recording medium in which a program for processing electronic money has been stored, wherein
said program allows a computer constructing a terminal apparatus in which an electronic money card having an interface and a mobile phone function is connected to a card slot and which is connected via the Internet to a bank server that is connected to said electronic money card via a mobile phone network to execute:
an authentication obtaining step wherein predetermined user authentication information including an account number and a telephone number obtained from said electronic money card is transmitted from said terminal apparatus to said bank server and authentication is obtained; and
a payment applying step wherein said bank server is notified of payment application in which a payment money amount and a payment date/time which has been set by changing a time lag from a payment application date/time in accordance with said payment money amount have been designated,
and wherein when said payment date/time comes, a telephone call is made from said bank server to said electronic money card, establishment of a telephone talk connection is confirmed, and payment of the electronic money is executed.

27. A computer-readable recording medium in which a program for processing electronic money has been stored, wherein
said program allows a computer constructing a terminal apparatus in which an electronic money card having an interface and a mobile phone function is connected to a card slot and which is connected via the Internet to a bank server that is connected to said electronic money card via a mobile phone network to execute:
an authentication obtaining step wherein predetermined user authentication information including an account number and a telephone number obtained from said electronic money card is transmitted from said terminal apparatus to the bank server and authentication is obtained; and
a payment applying step wherein said bank server is notified of payment application in which a payment money amount has been designated,
and wherein when a payment date/time which has been set by changing a time lag from a payment application date/time at which said payment application is received in accordance with said payment money amount accepted by said bank server comes, a telephone call is made to said electronic money card, establishment of a telephone talk connection is confirmed, and payment of the electronic money is executed.

28. A processing method for an electronic money card which is connected to a terminal apparatus of the user via a card slot and connected to a bank server via a mobile phone network, comprising:
a payment supporting step wherein when payment application in which at least a payment money amount has been designated is notified to said bank server by said terminal apparatus, his own telephone number and account number which have previously been stored are provided; and
a payment receiving step wherein when a payment date/time which has been set by changing a time lag from a payment application date/time in accordance with said payment money amount comes, if a telephone call is received from said bank server, establishment of a telephone talk connection is confirmed, and payment of the electronic money is received.

29. A method according to claim 28, wherein in said payment receiving step, it is discriminated that a phone number of an originator obtained by a telephone call from said bank server lies within a predetermined bank telephone number range which has previously been stored, and an automatic response is made, thereby establishing the telephone talk connection.

30. A program for processing electronic money, wherein
said program allows a computer of an electronic money card which is connected to a terminal apparatus of the user via a card slot and connected to a bank server via a mobile phone network to execute:
a payment supporting step wherein when payment application in which at least a payment money amount has been designated is notified to said bank server by said terminal apparatus, his own telephone number and account number which have previously been stored are provided; and
a payment receiving step wherein when a payment date/time which has been set by changing a time lag from a payment application date/time in accordance with said payment money amount comes, if a telephone call is received from said bank server, establishment of a telephone talk connection is confirmed, and payment of the electronic money is received.

31. A computer-readable recording medium in which a program for processing electronic money has been stored, wherein
said program allows a computer of an electronic money card which is connected to a terminal apparatus of the user via a card slot and connected to a bank server via a mobile phone network to execute:
a payment supporting step wherein when payment application in which at least a payment money amount has been designated is notified to said bank server by said terminal apparatus, his own telephone number and account number which have previously been stored are provided; and
a payment receiving step wherein when a payment date/time which has been set by changing a time lag from a payment application date/time in accordance with said payment money amount comes, if a telephone call is received from said bank server, establishment of a telephone talk connection is confirmed, and payment of the electronic money is received.
